# EUROPEAN PATENT APPLICATION

(11) **EP 1 280 298 A1**
(43) Date of publication of application: **29.01.2003**
(21) Application number: 01306438.1
(22) Date of filing: 26.07.2001
(51) Int. Cl.: H04L 12/26

(54) **Method and apparatus of detecting network activity**

(71) Applicant: BRITISH TELECOMMUNICATIONS public limited company, London EC1A 7AJ (GB)
(72) Inventor: The designation of the inventor has not yet been filed
(74) Representative: Lloyd, Barry George William

(57) **Abstract**

Embodiments of the invention are concerned with a method of, and apparatus for, identifying types of network behaviour for use in identifying aberrant network behaviour. In particular, embodiments are concerned with identifying email viruses. The method comprises the steps of:
collecting data representative of network traffic that has travelled over a network;
training a classification means to recognise a plurality of network behaviour types from the collected data; and
for unseen data travelling over the network, classifying the unseen data into one of the defined network behaviour types.

## Description

The present invention relates to methods of, and apparatus for, identifying types of network behaviour, and has particular application in identifying aberrant network behaviour, such as email viruses propagating through a network.

Email is the most widely used application service because it offers a fast, convenient method of transferring information. Its ability to communicate information quickly, seemingly independent of distance between sender and receiver, are the key features that makes email so attractive. Typically, these features can be exploited in a positive manner - e.g. to improve and increase the quality and quantity of business transactions, indeed it is precisely these factors that have made email so popular. However, these features can also be exploited in a negative manner - by so-called "viruses" - to cause disruption and even loss of data to the email recipient.

A virus is a piece of programming code, usually disguised as something else, that causes some unexpected and usually undesirable event, and which is often designed so that it is automatically spread to other computer users. The most common transmission means for a virus is by e-mail, usually as an attachment. Some viruses wreak their effect as soon as their code is executed; other viruses lie dormant until circumstances cause their code to be executed by the computer.

According to a first aspect of the invention there is provided a method of identifying types of network behaviour for use in identifying aberrant network behaviour. The method comprises the steps of:
collecting data representative of network traffic that has travelled over a network;
training a classification means to recognise a plurality of network behaviour types from the collected data; and
for unseen data travelling over the network, classifying the unseen data into one of the defined network behaviour types.

Preferably the collected data is arranged into groups of collected data as a function of behaviour of the collected data, so that each group comprises data having characteristics of a type of network behaviour. Thereafter the following steps are carried out for each group of data:
the data in the group is organised into a representation indicative of a distribution of the said network traffic;
the representation is transformed into a format suitable for input into a classification means;
the transformed representation is input to the classification means; and
the classification means is trained in accordance with the transformed representation input thereto so that the classification means classifies the collected data into one of the network behaviour types.

Preferably each group corresponds to a "known" type of network behaviour. Thus the classification means is trained using collected data for which the type of network behaviour is known.

In one embodiment, the step of organising a group of data into a representation comprises the following steps:
creating a representation comprising
   a plurality of regions, each of which is representative of an area of the network,
   a plurality of sub-regions, each of which is representative of a server machine within a corresponding area of the network, and
   a plurality of sub-sub regions, each of which is representative of a client machine acting as a client to a corresponding server machine, which client machine can be identified by a network address;
for each data in the group:
   identifying a network address associated with the data; and
   incrementing a counter representative of a level of network activity associated with the identified network address,
and
for each network address in the representation, adding an identifier, which is indicative of a level of network activity, to whichever sub region or sub-sub region corresponds to the said network address, thereby creating a representation of network activity.

Preferably the step of transforming the representation into a format suitable for input into a classification means comprises firstly transforming the representation into a frequency representation of network activity, and secondly converting the frequency representation into a vector, which is suitable for input into a classification means. Conveniently a Fourier transform can be applied to the representation to generate the said frequency representation, and the frequency representation can then be sampled, using subsampling or bootstrap methods, in order to extract vector values therefrom.

Alternatively, in a second embodiment, the step of organising a group of data into a representation comprises the following steps:
creating a plurality of lists, each of which corresponds to a link between server machines within the network; and
for each data in a group:
   identifying a link between server machines in the network that is associated with the data;
   identifying a list corresponding to the identified link;
   identifying attributes of the data; and
   for each identified attribute, incrementing a counter corresponding thereto in the identified list.

Conveniently data is collected during a plurality of time periods, and the steps of organising the collected data into a representation, and transforming the same, are performed for the said plurality of the said time periods. This means that there is a plurality of transformed representations for inputting to the classification means. Furthermore, embodiments of the invention can be carried out for different size time periods, so that behaviour having different characteristic time scales can be captured.

Preferably embodiments of the invention are applied to identify aberrant email activity, so that the data collected are email data packets travelling over the network.

In terms of classifying unseen data, this can be performed once the classification means has been trained using the data processed using the above-described method steps. Classification of unseen data then involves the following steps:
organising the unseen data into a representation as described above for either embodiments;
transforming the representation into a format suitable for input into the classification means as described above for either of the embodiments; and
inputting the transformed representation to the classification means that has been trained in accordance with the collected data; and
operating the classification means in order to identify a type of network behaviour associated with the unseen data.

Preferably the classification means is in operative association with an alerting means, so that, depending on the classification of the unseen data, an alert can be generated. Typically, if data is classified as having the potential to cause some damage, a large-scale alert, such as shutting down of parts of a network, is generated.

According to as second aspect of the invention there is provided apparatus corresponding to the method described above.

In the following description the terms "host", "client", "device" and "email data" are used; these are defined as follows:
"client" - a requesting program or user in a client/server relationship;
"host" - any computer that has two-way access to other computers in a network such as the Internet or an Intranet; a client is a particular type of host.
"device" - any machine that is operable to receive data delivered over a network. Examples of devices include hosts, clients, routers, switches, and servers.
"email data" - packet data that has emanated from an email application running on a first device en route for an email application running on a second device. Email data includes overhead data, which enables the packet to arrive at its destination, and is retrieved from the header part of a packet. Specifically email data includes at least protocol type, source address of packet, destination address of packet, size of payload of packet, and type of payload packet (which can be used to determine whether there is an attachment). A packet is identified as an email data type from examination of the protocol part of the header. The phrase "email packet data" and "email data" are used interchangeably in the following description.

Further aspects and advantages of the present invention will be apparent from the following description of preferred embodiments of the invention, which are given by way of example only and with reference to the accompanying drawings, in which
Figure 1 is a schematic diagram of a network, within which embodiments of the invention operate;
Figure 2 is a schematic diagram of components of a device comprising part of the wireless network of Figure 1;
Figure 3 is a flow diagram showing a method of classifying network behaviour according to an embodiment of the invention;
Figure 4a is a schematic diagram illustrating aspects of the method of Figure 3;
Figure 4b is a schematic diagram illustrating further aspects of the method of Figure 3;
Figure 4c is a schematic diagram showing further aspects of the method of Figure 3;
Figure 5a is a schematic diagram showing yet further aspects of the method of Figure 3;
Figure 5b is a schematic diagram illustrating other aspects of the method of Figure 3;
Figure 6 is a schematic diagram showing a classifier utilised by an embodiment of the invention;
Figure 7 is a flow diagram showing a method of classifying network behaviour according to a second embodiment of the invention;
Figure 8 is a schematic diagram showing aspects of the method of Figure 7.

### Overview of operating environment for embodiments of the invention

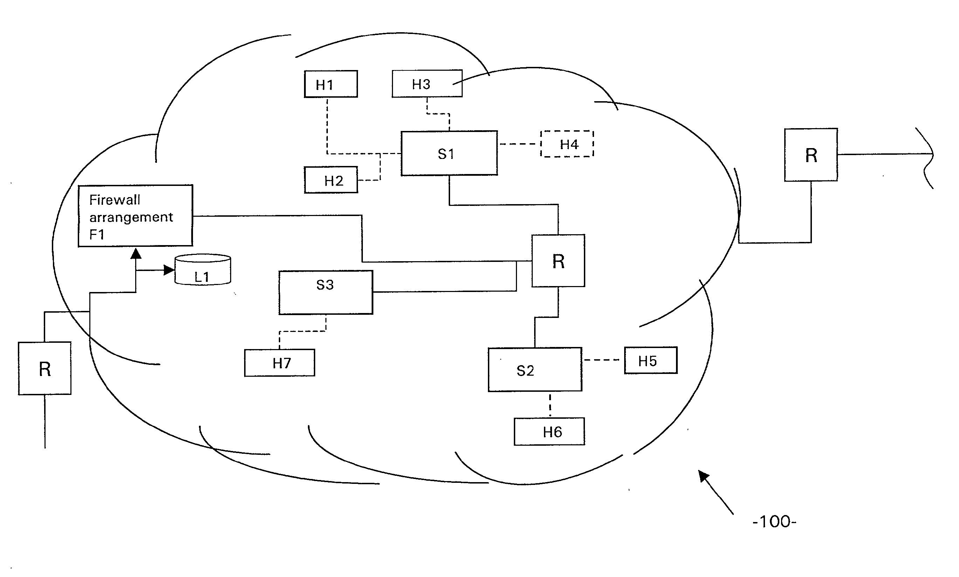

Figure 1 shows part of a network 100, having various devices operating therein. A network such as that shown in Figure 1 can be perceived as comprising a plurality of functional networks, one of which is an email network. An email network can be separated into a plurality of logical email domains, each of which comprises a plurality of server machines and client machines communicating therewith. Figure 1 shows part of a single logical email domain.

Thus the network 100 includes routers R, which route data to devices in the network in a manner known in the art and host machines H1 ... H7, which send and receive data, including email data, in a manner well known in the art. In the Figure, only a nominal number of routers R and host machines H1 ... H7 are shown for clarity. The network 100 additionally includes several email servers S1...Sn (only 3 shown for clarity), which receive email from host machines H1...H7 or from other email servers (not shown), and provide temporary storage of emails that are in transit to another destination. The dashed links shown in Figure 1 indicate email traffic passing between email server and host machine; for other communications, each of the host machines H1...H7 may communicate directly with the router R.

The network 100 could be a corporate network, typically comprising many interconnected Local Area Networks (LAN).

As stated above, the ability to communicate via email can be exploited by "viruses", which can cause large-scale disruption in terms of device loading and loss of data. Known methods applied to virus detection maintain a library of known viruses, together with software for searching for these known viruses (e.g. McAfee ™ and Dr Solomons ™, generally referred to as "anti-viral" software). These methods essentially perform analysis of byte-signatures of files in order to identify files having signatures corresponding to the known viruses.

A problem with these known approaches is that they are reactive - if a virus arrives at one of the hosts, say H1, then typically only if the virus has been seen before (and assuming that the host H1 has installed anti-viral software in respect of that virus) will the anti-viral software be effective. Thus, if host H1 were to receive an email that spawned a virus hitherto unseen, it would cause harm to the host H1, as there is currently no reliable means of detecting and halting the virus activity until it has been identified - i.e. after it has caused harm.

Embodiments of the invention are concerned with proactively detecting email viruses, and make use of a crucial realisation that the spread of, and thus damage due to, email viruses is dependent on transmission from one machine to other machines. As email traffic can be monitored, features of the viral transmission can potentially be detected before they cause significant damage.

In particular, embodiments look at the macroscopic behaviour of email traffic, by employing a method and apparatus for monitoring states of email network traffic, in order to identify aberrant behaviour.

### Overview of embodiments of the invention

Essentially embodiments analyse previously seen email data in order to identify a plurality of classification groups, or profiles, each of which is indicative of particular type of email behaviour, e.g. embodiments gather email data over a plurality of time periods, and group the data into a plurality of profiles, each of which is representative of certain types of email behaviour - e.g. normal activity profile (P1), busy activity profile (P2), fast spreading virus profile (P3), slow spreading virus profile (P4) and "chain mail" profile" (P5).

When new email data arrives, embodiments attempt to classify the email data into one of the known profiles P1...P5. If the data falls within one of the known profiles P1...P5, a predetermined action can be carried out - e.g. in some embodiments, there is additionally some means of alerting a system administrator, or a further diagnostic application, if the email data is of type P3 or P4. Thus advantages of embodiments include an ability to identify abnormal behaviour at an earlier stage of viral propagation than is possible with current methods.

Embodiments also include means for visualising email activity, essentially to visualise the distribution of email traffic around the network. Advantageously this enables a system administrator, who typically has considerable experience of the nature of email traffic, to visually identify unusual behaviour.

### First embodiment

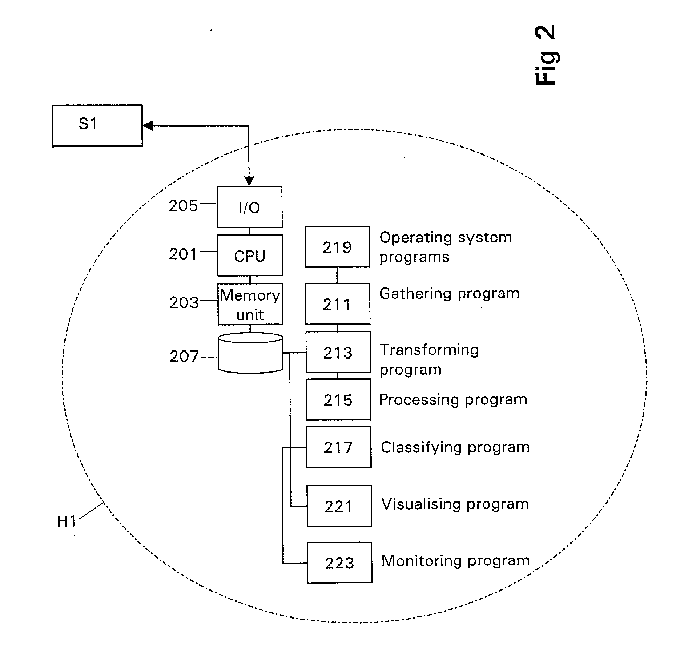

Referring to Figure 2, a first embodiment of the invention will now be discussed in more detail.

Figure 2 shows a host H1 comprising a central processing unit (CPU) 201, a memory unit 203, an input/output device 205 for connecting the host H1 to the network 100, storage 207, and a suite of operating system programs 219, which control and co-ordinate low level operation of the host H1. Such a configuration is well known in the art.

Generally embodiments of the invention are referred to as a virus detector 200, and comprise at least some of programs 211, 213, 215, 217, 221, 223. These programs are stored on storage 207 and are processable by the CPU 201.

The programs include a program 211 for gathering data, a program 213 for transforming the gathered data, and a program 217 for classifying the processed data. In addition, embodiments can include a program 215 for processing the transformed data, a program 221 for visualising the transformed data, and a program 223 for monitoring output of the classifying program 217. These programs 215, 221, 223 are described in more detail below.

The gathering program 211 collects unprocessed email data, typically accessible from either a log file L1 accessible from a firewall arrangement F1, or from processes embedded in the email network whose purpose it is to gather such data (not shown).

The transforming program 213 receives, as input, the gathered email data, and transforms it into a representation D1, and the classifying program 217 receives, as input, the representation D1 and inputs the representation D1 into a classifier. Suitable classifiers include any supervised learning means - e.g. a neural network, a pattern matcher etc. These are described in more detail below.

Depending on the form of the representation D1 and the classifier utilised in the classifying program 217, the processing program 215 may be used to pre-process the representation D1, in order to transform it into a form that can be handled by the classifying program 217.

In addition the visualising program 221 can be used to visualise the representation D1.

The virus detector 200 could alternatively run on an email server S1, or as a purpose-built device embedded in the network.

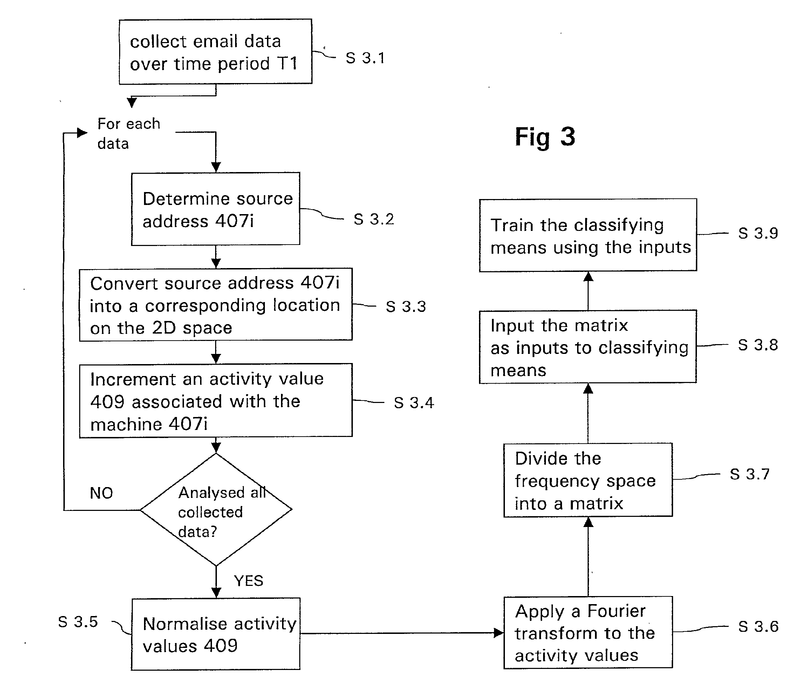

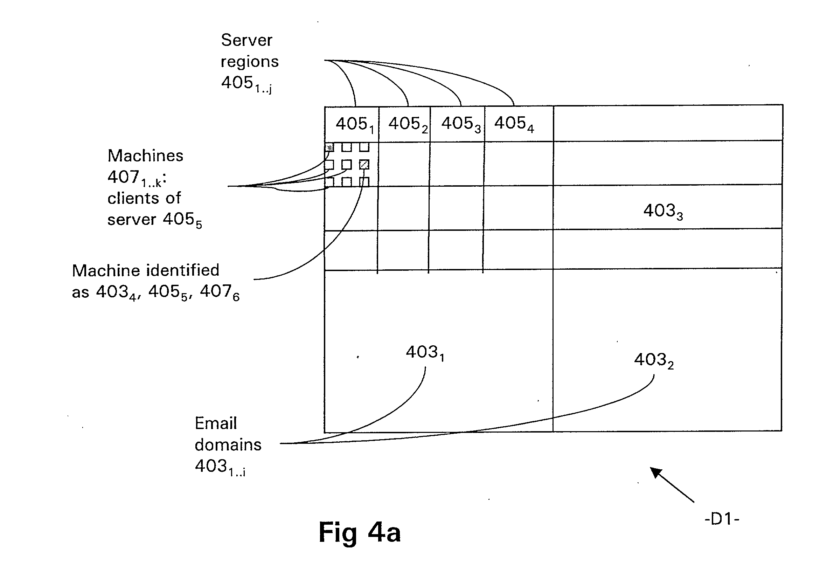

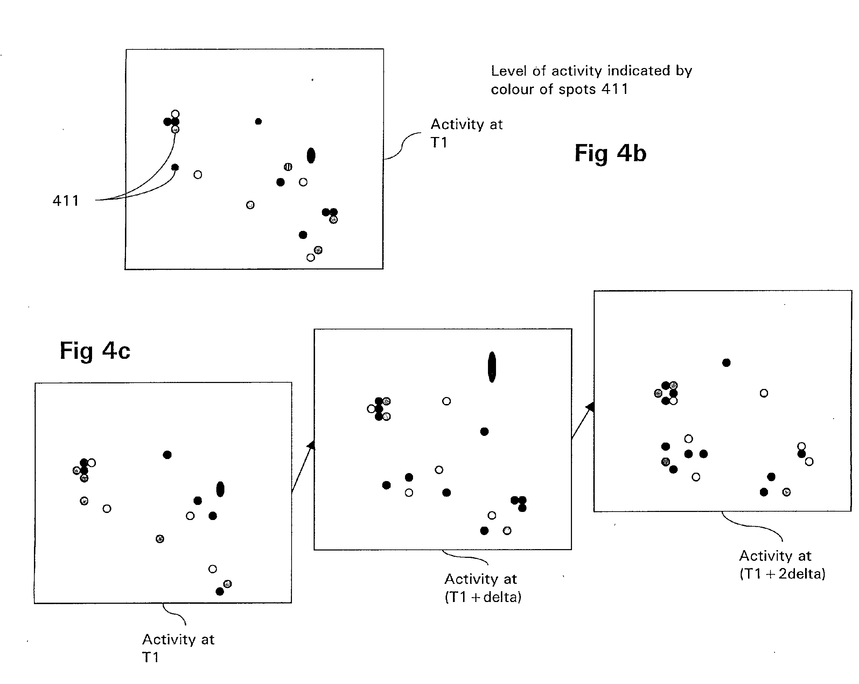

The operation of the viral detector 200, according to a first embodiment of the invention, will now be described with reference to the flowchart shown in Figure 3 and the schematic diagrams shown in Figures 4a, 4b and 4c.

At step S3.1, the gathering program 211 collects email data from the log file L1. Typically the gathering program 211 collects email data falling within a predefined time period T1. Next, the transforming program 213 arranges the collected data into a representation D1, as a function of source address of the collected data, e.g. either of internet-style address (scooby@scoobydoo.com), machine name (MYPC03 on server SERVER01), machine IP address (132.146.196.67) or user name associated with a machine or server name (User: JEDI, Machine: MYPC03).

Any distinguishing address can be used, provided it enables some sort of topological representation of machines in the network 100, whereby related addresses are positioned closer together than unrelated addresses. In this context *related* can mean connected, over a network - e.g. email clients connected to an email server are both *related* to one another and to the email server.

Thus for each item of collected data, at step S 3.2 the transforming program 213 determines a source address corresponding thereto; and at step S 3.3 the transforming program 213 converts the source address into a corresponding location in the network topology, and thus machine 407i (where i identifies a specific machine), in the representation D1.

Figure 4a shows a two-dimensional (2D) visual representation of one possible representation D1. Thus Figure 4a is a visual representation of connectivity between email client machines and email servers, where:
- email domains 403_{1...i}, which correspond to server regions that are part of a logical email domain;
- server regions 405_{1..j}, which correspond to a server (e.g. S1 having name SERVER01) within a server region 403ᵢ; and
- machines 407_{1..k}, each of which corresponds to a machine (e.g. H1 having name MYPC03) that is a client of a server 405j.

Additionally the machines 407_{1..k} could be further arranged (and visualised) in accordance with their alphabetic names within a corresponding server region 405ⱼ (e.g. first letter of name determines position left-to-right within region and second letter determines position top-to-bottom within region).

Positions of machine addresses need not necessarily be unique; within a particular server region 405ⱼ it may be useful to aggregate several machines 407_{1...k} therein into a single location, especially when there are many client machines in total in (say) a corporate email network.

Next, at step S 3.4, for each machine (which can be identified as 403ᵢ, 405ⱼ, 407ₖ (see Figure 4a)), the transforming program 213 calculates a value representative of email activity associated therewith. This value, described hereinafter as activity value 409, essentially quantifies how many email packets have emanated from each machine, and is calculated by summing the number of packets originating from a machine. Each calculated activity value 409 is then added to the representation D1 at a corresponding machine location in the network topology, thereby generating a distribution of email activity levels over the network topology representation D1.

Preferably, at step S 3.5, the activity values 409 are normalised. This normalisation could be linear, e.g. activity values could be normalised by the maximum activity level and recorded into a range [0, 1.0], or could be non-linear, e.g. logarithmic.

The visualising program 221 can be used to visualise the output of step S 3.5, i.e. the levels of activity at individual machines 407ₖ. One such output is shown in Figure 4b, which represents email activity during the time period T1: dark spots 411 indicate one, or a cluster of, machines that have been sending emails (in this particular set of collected data), while white areas indicate machine(s) that have/has not sent any emails. (Note that, given the scale of Figure 4b and the distance between machines 407ₖ, activity levels can appear to coagulate into larger spots).

In this embodiment, the darkness of the spots is graded in accordance with level of activity, so that the darkest spots represent a maximum level of activity, white areas represent zero activity, and grey scales indicate levels of activity between 0 and 1.

Alternatively, activity could be represented in a binary form, where any level of activity is assigned a dark spot, and zero activity is assigned a white spot.

Subsequently the processing program 215 converts the representation D1 into a format that is suitable for classification. As stated above, the processing program 215 is not essential to all embodiments of the invention, but in the present embodiment, where the representation D1 is a topological representation of connectivity between devices, such a conversion is required. Essentially an overall distribution, rather than exact locations of machines (and activity at those machines), is more amenable to classification.

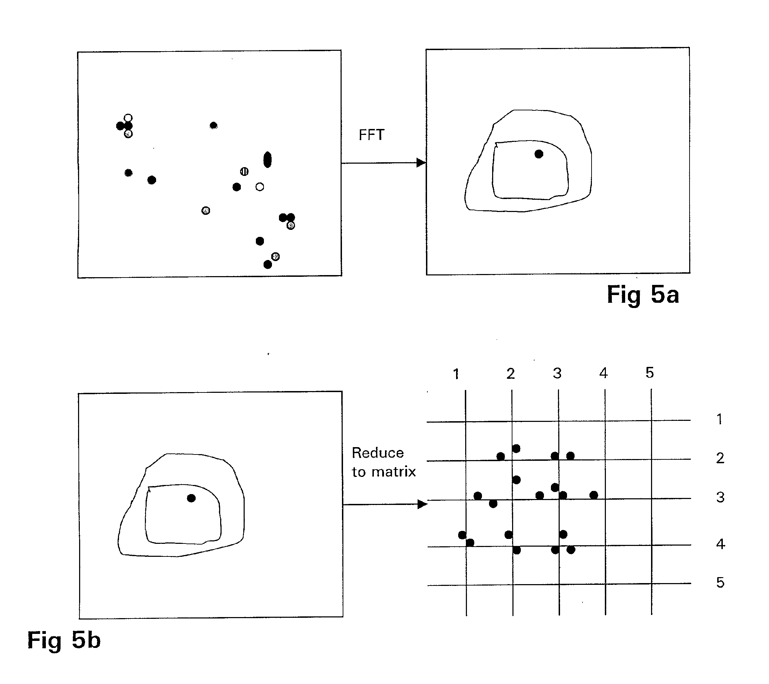

Thus at step S 3.6 the processing program 215 applies a Fourier transform to the distribution of activity (shown in Figure 4b), thereby generating a frequency based representation of the activity distribution, as shown in Figure 5a. The Fourier transform is well known to those skilled in the art, and is one of several methods that could be applied to convert the topological representation. For more details of the Fourier transform, the reader is referred to *"A Student's Guide to Fourier Transforms: With Applications in Physics and Engineering"* J. F. James, Cambridge Univ Pr (Sd); ISBN: 0521462983.

Next, at step S 3.7, the processing program 215 divides the frequency space into a matrix, such as that shown in Figure 5b, which in the present exemplifying example is a 5x5 matrix. The processing program 215 may apply a subsampling or bootstrap method to convert the Fourier Transform representation to a matrix form. Subsampling methods are so-called "re-sampling statistical methods" and are known for their use in sampling a range of image types, including Magnetic Resonance Images (MRI), and frequency space representations. For information relating to subsampling, particularly in the frequency domain, the reader is referred to Chapter 3 of *"wavelets and filter banks"* by Strang and Nguyen ISBN 0-9614088-7-1 Wellesley-Cambridge Press, Box 812060, Wellesley MA 02181, or more generally to *"Subsampling"* (Springer Series in Statistics) by Dimitris N. Politis, Joseph P. Romano, Michael Wolf.

An advantage of dividing the frequency space in this manner is that the processed data are then arranged in a convenient format for classification.

Subsequently the classifying program 217 trains a classifier to classify the processed data. The classifying program 217 may utilise one of many different types of classifiers that is capable of being trained by supervised learning - e.g. a neural network, a statistical classifier, a pattern recogniser etc., each of which is well known to those skilled in the art. Essentially these classifiers are trained using a training set of "known" input and output pairs, in order to learn a mapping from input to output. The reader is referred to *"Machine Learning",* T. M. Mitchell, McGraw-Hill 1997 for further information.

In embodiments of the present invention, the "known" input is the type of email behaviour corresponding to the email data collected during time period T1. Typically an experienced system administrator identifies characteristics of email data circulating around the network 100 within a time period Tᵢ, and labels the data accordingly. For example, say that during time period T1 the network 100 was known to be behaving "normally", and that during a second time period T3, the network was known to be suffering from a viral attack such as the Melissa virus, or Lovebug, which is a fast spreading type of virus. A system administrator would label data travelling over the network during time period T1 as "normal email behaviour" (P1); this is then the "known" output for the email data collected over time period T1.

The classifying program 217 thus inputs the matrix data corresponding to this time period T1 to the classifier and trains the same to generate an output corresponding to profile P1 (normal email behaviour). In the same way, email data collected (step S 3.1) during a second time period T3, when the network 100 was known to be suffering from a fast spreading viral attack, is processed as described above (steps S 3.2 - S 3.7), and the classifier is trained to generate an output corresponding to profile P3 for this matrix data.

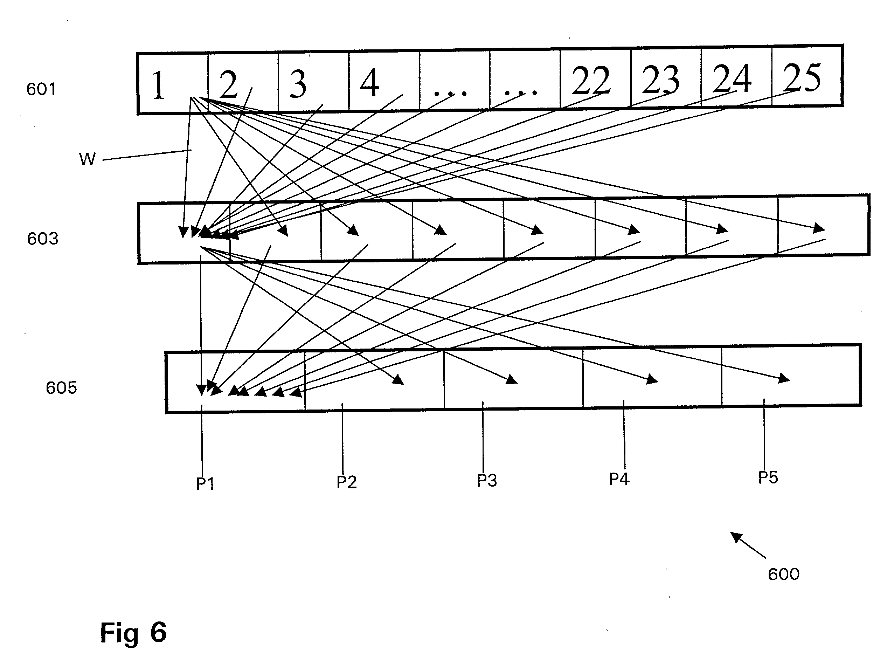

Thus at step S 3.8, in the present exemplifying example, the classifying program 217 receives as input a 5x5 matrix, which is essentially 25 inputs, and inputs these to a feed forward multi layer perceptron (MLP) neural network. Referring to Figure 6, the MLP 600 can comprise an input layer 601 having 25 input nodes, each corresponding to an element in the matrix, a hidden layer 603 having 8 nodes, and an output layer 605 having 5 nodes. Each of the nodes in the input layer 601 have a one-to-all connection with each node in the hidden layer 603, and each of the nodes in the hidden layer 603 have a one-to-all connection with each node in the output layer 605, as is shown in Figure 6. There are adjustable weights (referred to generally as W in Figure 6 for clarity) on the inter-node connections. The choice of number of nodes in the hidden and output layers 603, 605 is a design choice that would be apparent to one skilled in the art.

At step S 3.9 the classifying means 217 trains the MLP 600 to generate the "known" output. Essentially the matrix is input to the input layer, and used to adjust weights between nodes in the layers 601, 603, 605 over multiple training iterations. For a MLP such as that shown in Figure 6, a well-known training algorithm is the back-propagation algorithm, which "feeds back" errors between a desired output and outputs produced by the MLP 600, and inter-node weights W are adjusted so as to reduce these errors. Such a training method is well known to those skilled in the art, and is described in the above referenced book.

Clearly confidence in the ability of the MLP 600 to correctly classify unseen data is dependent on the way in which the MLP 600 has been trained, and this ability broadly scales with number of data used to train the MLP. Thus, for each of the "known" types of email behaviour, data from a plurality of time periods Tᵢⱼ (where subscript i refers to type of email behaviour and subscript j refers to a time period during which data is collected) that is known to behave in accordance with that email behaviour, are used to train the MLP 600. In summary, preferably steps S 3.1 - S 3.9 are repeated ixj times, for j sets of data corresponding to each type of "known" email behaviour i.

Having repeated steps S 3.1 - S 3.9 as described above, each of the nodes in the output layer 605 will represent one of the profiles Pᵢ described above: e.g. normal activity profile (P1), busy activity profile (P2), fast spreading virus profile (P3), slow spreading virus profile (P4) and "chain mail" profile (P5).

Once the MLP 600 has been trained, it can be used to classify unseen data - typically data captured over a particular time period. The virus detector 200 will process the unseen data in accordance with steps S 3.1 - S 3.8, but rather than training the MLP 600 using the unseen data, as per step S 3.9, the classifying program 217 will use the classifier 600 to classify each of the unseen data. Typically, for each of the unseen data, the MLP 600 will generate a distribution across the output layer 605 - i.e. each of the 5 nodes will have some value. An unseen data is assigned to whichever node has the highest value; as each node represents one of the profiles P1..P5, the unseen data is correspondingly classified.

One of the advantages of classifying by "rate of email propagation" (profiles P3 and P4) is that, irrespective of the specific nature of the virus, embodiments can identify behaviour that spawns a particular rate of email propagation. As stated above, one of the key features of viruses is that they rely on email to spread - thus monitoring the *rate* of email propagation is probably a reliable indicator of aberrant email activity.

Embodiments can additionally include a program 223, which monitors the nodes on the output layer 605 in order to generate an alert should any items of unseen data be classified as some sort of virus (e.g. P3, P4, P5). Preferably the type of alert generated should be dependent on the classification. Thus, for example, if email behaviour is classified as profile P3 ("fast viral spread"), a draconian response, such as shutting down part of the network, could be activated; if email behaviour is classified as profile P4 ("slow/benign virus spread") a response such as "strip all attachments of type X from email messages", could be activated; and if email behaviour is classified as profile P5 ("chain mail), all email users may be sent a warning message, requesting them not to forward the email.

### Second embodiment

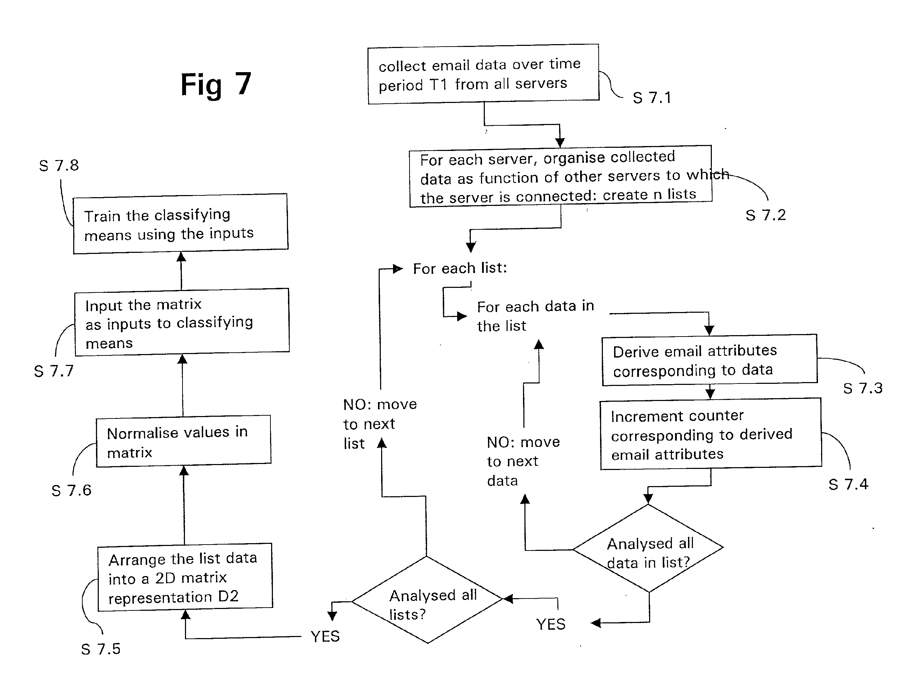

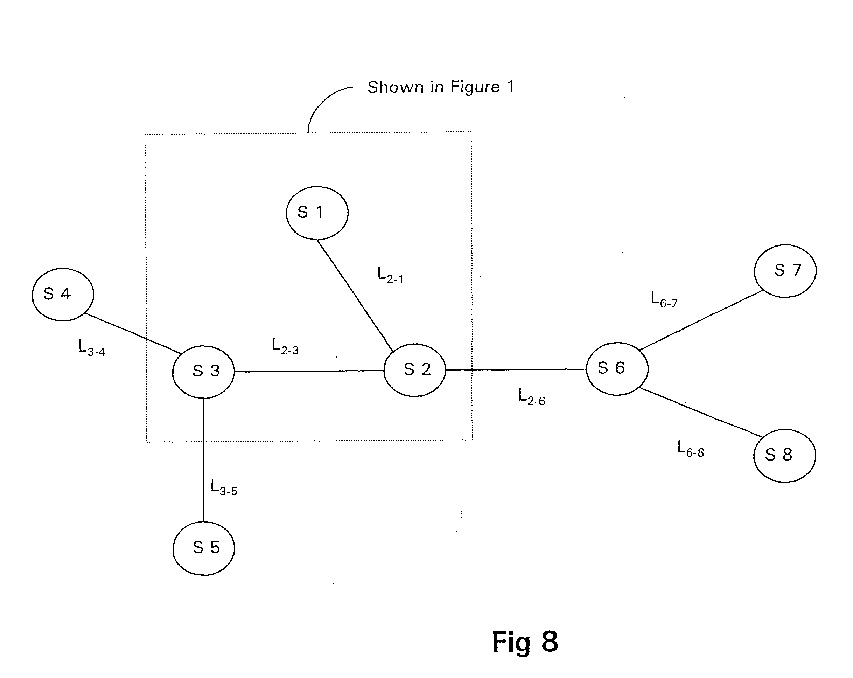

A second embodiment is now described with reference to the flowchart shown in Figure 7 and the schematic diagram shown in Figure 8. The second embodiment is generally similar to that of Figures 1, 2 and 6 in which like parts have been given like reference numerals and will not be described further in detail.

Firstly, the gathering program 211 collects data representative of email traffic flowing within the network 100. Referring to Figure 8, this is essentially equivalent to collecting data representative of emails travelling over links Lᵢ₋ⱼ. Thus at step S 7.1 data that is indicative of email traffic that has passed through servers S1..S8 during a predetermined time period T1 is collected from each of the said servers.

At step S 7.2, the gathering program 211 organises items of the collected data as a function of server on which the item of data is stored, and thence as a function of server to which any given server is connected. For example, referring again to Figure 8, considering server S2, the data collected therefrom are organised into 3 lists, a first corresponding to link L₂₋₆, a second corresponding to link L₂₋₃, and a third corresponding to link L₂₋₁.

Assuming each server S1...S8 maintains a record of all incoming and outgoing emails, once the data collected from server S2 have been analysed, there is no need to analyse the data on server S1 because in this example server S1 is only connected to server S2, and thus only stores the same information relating to link L₂₋₁ that has been analysed for server S2. However, the data collected from servers S3 and S6 will need further analysis, because these servers S3, S6 are each connected to other email servers, S4, S5 and S7, S8 respectively. At the end of step S 7.2 there will be 7 lists, each corresponding to a link.

Each list has a number of columns therein, each representing a distinguishing email characteristic, referred to as an email attribute (ATT), such as size of email; presence or absence of attachments; predefined sub-domain of the network 100; and/or other characteristics that will be apparent to one skilled in the art. When, upon analysis of an email, the email is identified as having an attribute, a counter value corresponding to that attribute is incremented.

Thus at step S 7.3, for each list, each item of data therein is analysed to derive email attributes corresponding thereto, and at step S 7.4 counter values corresponding to whichever attributes have been derived for the item of data are incremented.

For example, if the attributes, and thus columns in the list, are: number of emails transferred over link; emails with Visual Basic ™ attachment; emails of size> 1 MB, at the end of analysis of all data in all lists, a list corresponding to Link L₂₋₃ may comprise the following:

| LIST (LINK) | ATT 1 | ATT2 | ATT3 |
|---|---|---|---|
| | (total number of emails transferred over the link) | (total number of emails transferred over the link with a visual basic attachment present) | (total number of emails transferred over the link which are larger than 1M bytes) |
| L2-3 | 300 | 112 | 15 |

At step S 7.5, the transforming program 213 arranges the list data into a two-dimensional (2D) representation D2, where a first dimension represents link between servers Lᵢ₋ⱼ and a second dimension represents attributes used to characterise emails passing over the link (ATT1, ATT2, ATT3 etc.). As can be seen from Figure 8, in this particular embodiment the number of links is 7. Taking the number of attributes to be 3, D2 is a 3x7 matrix 801. It is understood that any number of attributes (n), could be used, so that, for p links, D2 is generally an nxp matrix.

Preferably, at step S 7.6, the matrix values are normalised. In the present embodiment the processing program 215 is not required because representation D2 is already in a format that is amenable to classification.

Next the classifying program 217 classifies the processed data. As for the first embodiment, the classifying program 217 may utilise one of many different types of classifiers that is capable of being trained by supervised learning - e.g. a neural network, a statistical classifier, a pattern recogniser etc., each of which, as described with respect to the first embodiment, is well known to those skilled in the art.

Thus at step S 7.7, in the present exemplifying example, the classifying program 217 receives as input a 3x7 matrix, which is essentially 21 inputs, and inputs these to a feed forward multi layer perceptron (MLP) neural network, as described with respect to the first embodiment. Referring again to Figure 6, in the second embodiment the MLP 600 can comprise an input layer 601 having 21 input nodes, each corresponding to an element in the matrix, a hidden layer 603 having 8 nodes, and an output layer 605 having 5 nodes.

At step S 7.8 the classifying means 217 trains the MLP 900 using the inputs as described above in respect of the first embodiment.

### Additional details and other embodiments

Embodiments could additionally be used to analyse data over *successive* time periods, T, T+δT T+2δT, etc., where T is a first time period and T+δT, T+2δT are respectively, successive time periods following T, in which case the visualising program 221 could visualise corresponding successive representations of email activity, such as those shown in Figure 4c. This would permit the dynamics of email activity to be observed, which itself could assist in identifying abnormal email activity and/or email server loading.

As an alternative to collecting email traffic flowing over links Lᵢ₋ⱼ, data flowing through the servers could be collected, i.e. independent of the path taken by the emails to and/or from a server. Characterising email traffic in this way is likely to be more efficient than the method described in the second embodiment, because step S 7.2 simply comprises organising the data as a function of server on which the email data is stored. In this embodiment there will be 8 lists, each of which corresponds to a server. Steps S 7.3 - S 7.7 are carried out as described above.

The selection of the time period T1, over which data is collected, is important, because viruses spread at different rates, and, in order to identify different classes of behaviour, it may therefore be necessary to collect data over a range of time periods T1. For example a first type of virus could potentially spread automatically on receipt of email, leading to a very fast machine/network time spread, and a second type of virus could spread in human time i.e. dependent on a human reader opening an email attachment before the infection can spread, thereby having a time period T1 of the order of minutes or hours or days.

Embodiments may be modified to have different classifiers, each assigned to a particular time period T1 - i.e. emails collected in one time period T1ₐ may be classified by a first Classifier, Cₐ, and emails collected in a second time period T1_{b} may be classified by a second Classifier, C_{b}. Each classifier is likely to detect different types of email behaviour.

The duration of these time periods T1ₐ and T1_{b} can be determined experimentally.

The classifying program 217 could be hard wired - e.g. a neural network computer chip.

In the afore-described embodiments data are organised as a function of source addresses of emails, i.e. data collected from the log file L1 (or, in the second embodiment, the files stored on servers S1 ..n) are transformed into a representation D1, D2 as a function of source (email or machine) address. Alternatively or additionally the data could be represented as a function of destination address; if the data were represented as a function of both source and destination address, both parameters (source and destination addresses) could be joined, side-by-side.

The current embodiments assume that, for each time period T1, all of the data in the log file L1 or servers S1...Sn are used to classify email behaviour. As an alternative, and particularly if processing load were a problem, every nth email entry could be processed.

As an alternative to being attached to the firewall F1, the Log file L1 could be accessible to one of the email servers S1....S7; as an additional alternative, and dependent on the configuration of the network 100, data could be collected from a plurality of log files.

The embodiments described above utilise "supervised training" classifiers, which means that it is assumed that there is adequate training data to train for each (manually predetermined) class of email activity of interest. As a result the classifier would not identify any new (untrained) behaviour in this model, but would try to classify it into one of the predetermined profiles P1...P5.

As an alternative, and in order to autonomously identify new profiles Pi, the classifying program 217 could include "unsupervised learning" means, such as a Kohonen Network. Such an unsupervised learning means identifies new profiles via a self-organising process, and modifies the possible profiles into which behaviour can be classified accordingly.

As will be understood by those skilled in the art, the invention described above may be embodied in one or more computer programs. These programs can be contained on various transmission and/or storage mediums such as a floppy disc, CD-ROM, or other optically readable medium, or magnetic tape so that the programs can be loaded onto one or more general purpose computers or could be downloaded over a computer network using a suitable transmission medium.

The programs 211, 213, 215, 217, 221, 223 of the present invention are conveniently written using the C programming language, but it is to be understood that this is inessential to the invention.

## Claims

1. A method of identifying types of network behaviour for use in identifying aberrant network behaviour, comprising the steps of:
a) collecting data representative of network traffic that has travelled over a network;
b) training a classification means to recognise a plurality of network behaviour types from the collected data; and
c) for unseen data travelling over the network, classifying the unseen data into one of the defined network behaviour types.

2. A method according to claim 1, further including arranging the collected data into groups of collected data as a function of behaviour of the collected data, so that each group comprises data having characteristics of a type of network behaviour.

3. A method according to claim 2, in which step (b) comprises the following steps:
for each group
i. organising the data in the group into a representation indicative of a distribution of the said network traffic;
ii. transforming the representation into a format suitable for input into a classification means;
iii. inputting the transformed representation to the classification means; and
iv. training the classification means in accordance with the transformed representation input thereto so that the classification means classifies the collected data into one of the network behaviour types.

4. A method according to claim 1, in which step (b) comprises the following steps:
i. organising the collected data into a representation indicative of a distribution of the said network traffic;
ii. transforming the representation into a format suitable for input into a classification means;
iii. inputting the transformed representation to the classification means; and
iv. training the classification means in accordance with the transformed representation input thereto so that the classification means classifies the collected data into one of a known network behaviour types.

5. A method according to claim 3 or claim 4, in which step (i) comprises the steps of
creating a representation comprising
a plurality of regions, each of which is representative of an area of the network,
a plurality of sub-regions, each of which is representative of a server machine within a corresponding area of the network, and
a plurality of sub-sub regions, each of which is representative of a client machine acting as a client to a corresponding server machine, which client machine can be defined by a network address;
for each data:
identifying a network address associated with the data; and
incrementing a counter representative of a level of network activity associated with the identified network address,
and
for each network address in the representation, adding an identifier, which is indicative of a level of network activity, to whichever sub region or sub-sub region corresponds to the said network address, thereby creating a representation of network activity.

6. A method according to claim 5, in which the level of network activity is normalised over all of the identified network addresses.

7. A method according to either claim 5 or claim 6, in which step (ii) comprises the steps of
transforming the representation into a frequency representation of network activity; and
converting the frequency representation into a vector, which vector is suitable for input into a classification means.

8. A method according to claim 7, in which the step of transforming the representation into a frequency representation comprises applying a Fourier transform to the said representation.

9. A method according to claim 7 or claim 8, in which the step of converting the frequency representation into a vector comprises sampling the frequency representation in order to extract vector values corresponding thereto.

10. A method according to claim 3 or claim 4, in which step (i) comprises the steps of
creating a plurality of lists, each of which corresponds to a link between server machines within the network; and
for each data in the group:
identifying a link between server machines in the network that is associated with the data;
identifying a list corresponding to the identified link;
identifying attributes of the data; and
for each identified attribute, incrementing a counter corresponding thereto in the identified list.

11. A method according to claim 10, in which step (ii) comprises creating a vector comprising at least some of the lists, which vector is suitable for input into a classification means.

12. A method according to any one of claims 3 to 11, in which data is collected during a plurality of time periods, and steps (i) and (ii) are performed for the said plurality of the said time periods, thereby generating a plurality of transformed representations for inputting to the classification means.

13. A method according to claim 12, in which the method is carried out for a plurality of different size time periods, so that there are a plurality of network behaviour types for each size of time period.

14. A method according to claim 13, in which, for each size time period, a different respective classification means is used.

15. A method according to any one of the preceding claims, wherein the data being collected is email data, and the aberrant network behaviour to be identified is email viruses propagating through the network.

16. A method according to claim 15, in which step (a) includes collecting data from any one of a log file being part of a firewall arrangement, or a log file accessible from an email server machine, or a plurality of log files accessible from a plurality of email server machines.

17. A method according to any one of the preceding claims, in which step (c) comprises
organising the unseen data into a representation according to any one of claims 5 or claim 10;
transforming the representation into a format suitable for input into the classification means according to claim 9 or claim 11; and
inputting the transformed representation to the trained classification means; and
operating the classification means in order to classify the unseen data as a type of a network behaviour.

18. Apparatus for identifying types of network behaviour for use in identifying aberrant network behaviour, comprising
collecting means arranged to collect data representative of network traffic that has travelled over a network during a time period;
means operable to arrange the collected data into groups of collected data as a function of behaviour of the collected data, so that each group comprises data having characteristics of a type of network behaviour;
organising means arranged to organise data in each group into a representation indicative of a distribution of the said network traffic during the period for that group;
transforming means arranged to transform the representation into a format suitable for input into a classification means; and
a classification means operable to receive the transformed representation as input and operable to generate an output representative of a network behaviour corresponding to the group.

19. Apparatus according to claim 18, wherein the collecting means is operable to retrieve data from any one of a log file being part of a firewall arrangement, or a log file accessible from a server machine, or a plurality of log files accessible from a plurality of server machines.

20. Apparatus according to claim 18 or claim 19, wherein the organising means comprises means arranged to create a representation indicative of a level of activity of machines in the network.

21. Apparatus according to claim 20, wherein the transforming means includes means operable transform the representation into a frequency representation.

22. Apparatus according to claim 21, wherein the transforming means includes means operable to apply a Fourier transform to the representation, thereby generating the frequency representation.

23. Apparatus according to claim 18 or claim 19, wherein the organising means comprises means arranged to analyse data passing through each of a plurality of server machines and to identify attributes associated therewith, so as to create a representation indicative of type of data passing through the said server machines in the network.

24. Apparatus according to any one of claims 18 to 23, wherein the classification means comprises any one of a neural network, a statistical classifier or a pattern recogniser.

25. Apparatus according to claim 24, wherein, when the classification means comprises a neural network, the said neural network comprising at least
an input layer comprising a plurality of input nodes,
a hidden layer comprising a plurality of hidden nodes, which hidden layer is in operative association with the input layer, and
an output layer comprising a plurality of output nodes, which output layer is in operative association with the hidden layer,
wherein each of the output nodes corresponds to a type of network behaviour.

26. Apparatus according to any one of claims 18 to 25, wherein the data being collected is email data, and the aberrant network behaviour to be identified is email viruses propagating through the network.

27. Apparatus according to claim 26, wherein at least some of the output nodes correspond to rates of email virus propagation.

28. Apparatus according to any one of claims 18 to 27, further including alerting means in operative association with at least some of the output nodes, which alerting means is operable to generate one of a plurality of alert outputs,
wherein the type of alert so generated is dependent on activation of output nodes.

29. A device for identifying types of email propagation for use in identifying email viruses, the device being located in a network and operable to communicate with other devices in the network, comprising
collecting means operable to retrieve email data, during a time period, from any one of a log file being part of a firewall arrangement, or a log file accessible from an email server machine, or a plurality of log files accessible from a plurality of email server machines;
organising means arranged to organise collected email data into a representation indicative of a distribution of the said email data during the period;
transforming means arranged to transform the representation into a format suitable for input into a classification means; and
a classification means operable to receive the transformed representation as input and operable to generate an output representative of a type of email behaviour.
